Europäisches Patentamt

European Patent Office

Office européen des brevets

(19)

(11) Veröffentlichungsnummer: **0 258 437 B1**

(12)

# EUROPÄISCHE PATENTSCHRIFT

(45) Veröffentlichungstag der Patentschrift:
29.05.91 Patentblatt 91/22

(51) Int. Cl.$^5$: **G01M 11/06**

(21) Anmeldenummer: **86902579.1**

(22) Anmeldetag: **20.02.86**

(86) Internationale Anmeldenummer:
**PCT/SU86/00012**

(87) Internationale Veröffentlichungsnummer:
**WO 87/05106 27.08.87 Gazette 87/19**

(54) PRÜFUNGSVORRICHTUNG FÜR BELEUCHTUNGSEINRICHTUNG VON KRAFTFAHRZEUGEN.

(43) Veröffentlichungstag der Anmeldung:
09.03.88 Patentblatt 88/10

(45) Bekanntmachung des Hinweises auf die
Patenterteilung:
29.05.91 Patentblatt 91/22

(84) Benannte Vertragsstaaten:
**CH DE FR GB IT LI SE**

(56) Entgegenhaltungen:
**DE-A-12 641 877
DE-A-12 641 878
DE-B-22 313 583
DE-U- 8 512 054**

(73) Patentinhaber:
**NAUCHNO-ISSLEDOVATELSKY I
EXPERIMENTALNY INSTITUT
AVTOMOBILNOGO ELEKTROBORUDOVANIA I
AVTOPRIBOROV
ul. Kirpichnaya, 39/41
Moscow 105187 (SU)**
Patentinhaber: **GOSUDARSTVENNY
NAUCHNO-ISSLEDOVATELSKY INST.
AVTOMOBILNOGO TRANSPORTA
ul. Geroev Panfilovtsev, 24
Moscow 123514 (SU)**

(72) Erfinder: **NOVAKOVSKY, Leonid Grigorievich
Chernitsynsky proezd, 8-119
Moscow, 107241 (SU)**
Erfinder: **DEKALENKOV, Alexandr
Sergeevich
ul. Paustovskogo, 8-3-741
Moscow, 117463 (SU)**
Erfinder: **SIDYGANOV, Anatoly Ustinovich
pr. Budennogo, 15/2-65
Moscow, 105118 (SU)**

(74) Vertreter: **Ebbinghaus, Dieter et al
v. FÜNER, EBBINGHAUS, FINCK Postfach 95
01 60
W-8000 München 95 (DE)**

## Beschreibung

Die Erfindung betriff Einrichtungen zur Kontrolle der Einstellung von Scheinwerfern der Transportmittel.

Weitbekannt ist eine Einrichtung zur Diagnostik von Scheinwerfern der Transportmittel (vlg. z.B. die sowjetische Urheberurkunde Nr. 388658), die eine auf beweglicher Stütze befestigte zylindrische Führung mit einem darauf montierten optischen System enthält. Das optische System besteht aus einem Gehäuse mit einem darin angeordneten Objektiv sowie einem ebenfalls im Gehäuse eingebauten Schirm mit Kontrollmarkierung. Auf der zylindrischen Führung befindet sich auch ein aus zwei Spiegeln bestehendes System zur Orientierung der optischen Achse der Einrichtung in Bezug auf die Symmetrieachsen eines Transportmittels, wobei ein Spiegel dieses Systems an einer an der Zylindrischen Führung angeordneten Konsole gelenkig befestigt ist und der andere Spiegel am Gehäuse des optischen Systems aufgestellt ist und in der Vertikalebene geschwenkt werden kann. Der zweite Spiegel weist eine orthogonale Visiermarkierung auf. Bei diesem Aufbau der Einrichtung zur Kontrolle der Einstellung von Scheinwerfern der Transportmittel wird eine ausreichend hohe Genauigkeit der Diagnostik von Scheinwerfarn der Transportmittel erzielt.

Derartig ausgeführte Einrichtungen haben aber bedeutend große Abmesungen und großes Gewicht infolge der oberen Lage des Spiegels im System zur Orientierung der optischen Achse der Einrichtung und wegen der komplizierten Spiegelbefestigung auf der zylindrischen Führung. Infolgedessen ist die Anwendung der Einrichtung zur operativen Kontrolle von Transportmitteln durch Dienststellen der staatlichen Kraftfahrzeug-Inspektion sowie von Besitzern privater Transportmittel ausgeschlossen.

Eine andere weitgehend bekannte Einrichtung zur Kontrolle der Einstellung von Scheinwerfern der Transportmittel (vgl. z. B. Gebrauchsmuste Nr. 8512054.5) enthält eine als Rahmen ausgeführte Vertikalführung, in deren unterem Teil zwei Stützen gelenkig befestigt sind. Die Einrichtung enthält weiterhin ein optisches System, welches aus einem in einer Fassung an der Vertikalführung angeordneten Objektiv und einem an einer der Stützen auf einer Konsole montierten Schirm besteht, wobei die Konsole mit der Objektivfassung gelenkig verbunden ist. Auf die Schirmoberfläche ist eine Horizontalmarkierung mit einem horizontalen und einem geneigten Abschnitt aufgetraten. Die Gelenke, mit deren Hilfe das Objektiv, die Konsole und der Schirm miteinander verbunden sind, ermöglichen es, die Abmessungen der Einrichtung bei ihrer Überführung in den transportgerechten Zustand zu verkleinern. Im oberen Teil des Rahmens ist eine Konsole angebaut, mit der ein als Flachspiegel ausgeführtes Mittel zur Orientierung der optischen Achse der Einrichtung in Bezug auf die Fahrrichtung des Transportmittels gelenkig verbunden ist, wobei dieser Spiegel um die durch die Konsole gebildete Horizontalabschse gedreht werden kann. Auf die Oberfläche dieses Mittels zur Orientierung der optischen Achse der Einrichtunt ist eine Visierlinie aufgetragen, die parallel zum Horizontalabschnitt der Kontrollmarkierung auf dem Schirm des optischen Systems liegt. Die kompaktere Konstruktion dieser Einrichtung zur Kontrolle der Einstellung von Scheinwerfern der Transportmittel wird im Transportzustand der Einrichtung durch die Gleichheit von Abmessungen der Stützen, der Konsole des Mittels zur Orientierung der optischen Achse der Einrichtung und der Abmessungen des Rahmens gewährleistet.

Aber im Transport- und Betriebszustand sind Abmessungen dieser Einrichtung zur Kontrolle der Einstellung von Scheinwerfern der Transportmittel dennoch groß. Dies ist durch die obere Lage des Spiegels zur Orientierung der optischen Achse der Einrichtung und durch das Vorhandensein der Konsole zur Befestigung dieses Spiegels bedingt. Der Aufbau der beschriebenen Einrichtung ist kompliziert und erfordert einen zusätzlichen Zeitaufwand für ihre Überführung in den Betriebszustand, was auch durch die erforderliche Aufstellung des Spiegels zur Orientierung der optischen Achse der Einrichtung über den zur Orientierung gewählten Karosseriestellen des Transportmittels verursacht wird.

Der Erfindung liegt die Aufgabe zugrunde, eine Einrichtung zur Kontrolle der Einstellung von Scheinwerfern der Transportmittel zu entwickeln, in der die Anordung des Elements zur Orientierung der optischen Achse der Einrichtung in Bezug auf die Fahrrichtung des Transportmittels eine konstruktive Vereinfachung der Einrichtung ergibt und eine höhere Arbeitsleistung bei der Benutzung der Einrichtung ermöglicht.

Dies wird dadurch erreicht, daß in der zur Kontrolle der Einstellung von Scheinwerfern der Transportmittel bestimmten Einrichtung mit einer als Rahmen ausgeführten Vertikalführung, an deren unteren Teil zwei Stützen gelenkig angebaut sind, sowie mit einem optischen System, welches aus einem in einer Fassung an der Vertikalführung angeordneten Objektiv und einem an einer der Stützen auf einer Konsole montierten Schirm mit einem horizontalen und einem geneigten Abschnitt eine Kontrollmarkierung besteht, wobei die Konsole mit der Objektiv- fassung gelenkig verbunden ist, und mit einem zur Orientierung der optischen Achse der Einrichtung in Bezug auf die Fahrrichtung des Transportmittels vorgesehenen Mittel, auf dem die Visierlinie parallel zum Horizontalabschnitt der Kontrollmarkierung am Schirm des optischen Systems liegt, das Mittel zur Orientierung der optischen Achse der Einrichtung in Bezug auf die Fahrrichtung des Transportmittels erfindungsgemäß an einer an der Seite der Eintrittsöffnung des Objektivs des optischen Systems liegenden Stütze gelenkig befestigt ist, wobei die Achse des Gelenks parallel zur Visierlinie des Mittels zur Orientierung der optischen Achse der Einrichtung in Bezug auf die Fahrrichtung des Transportmittels liegt.

Um die Genauigkeit der Orientierung der Einrichtung in Bezug auf das Transportmittel nach symmetrischen Punkten seiner Karosserie zu erhöhen, ist es zweckmäßig, das Mittel zur Orienterung der optischen Achse der Einrichtung in Bezug auf die Fahrrichtung des Transportmittels als Spiegel auszuführen, auf dessen Spiegelfläche die Visierlinie gezogen ist.

Zur Erhöhung der Orientierungsgenauigkeit der Einrichtung durch Vergrößerung des Gesichtsfeldes beim Anvisieren des Transportmittels im Spiegel des Mittels zur Orientierung der optischen Achse der Einrichtung bezüglich der Fahrrichtung des Transportmittels sowie zur Verbesserung von ergonomischen Eingenschaften der Einrichtung kann die Spiegelfläche des Spiegels zur Orientierung des optischen Achse der Einrichtung zweckmäßiger-weise in der Art einer Fläche zweiter Ordnung ausgebildet sein.

Dank der angegebenen Anordnung des Mittels zur Orientierung des optischen Achse der Einrichtung in Bezug auf die Fahrrichtung des Transportmittels ergibt sich die Möglichkeit, den Aufbau der vorgeschlagenen Einrichtung zur Kontrolle von Scheinwerfern der Transportmittel zu vereinfachen, ihr Gewicht herabzusetzen, die Abmessungen der Einrichtung im Transportzustand zu verkleinern und die Arbeitsleistung bei der Benutzung der Einrichtung zu erhöhen.

Nachstehendfolgt eine ausführliche Beschreibung der Einrichtung zur Kontrolle der Einstellung von Scheinwerfern der Transportmittel und der Ausführungsvarianten dieser Einrichtung auhand beigefügter Zeichnungen. Hierbei zeigen :

Fig. 1 eine im Betriebszustand dargestellte Einrichtung zur Kontrolle der Einstellung von Scheinwerfern der Transportmittel gemäß der Erfindung (Axonometrie) ;

Fig. 2 eine andere Ausführungsvariante der Einrichtung gemäß der Erfindung im Betriebszustand (Axonometrie) ;

Fig. 3 eine Einrichtung gemäß der Erfindung im Transportzustand (Axonometrie).

Bevorzugte Ausführungsform der Erfindung

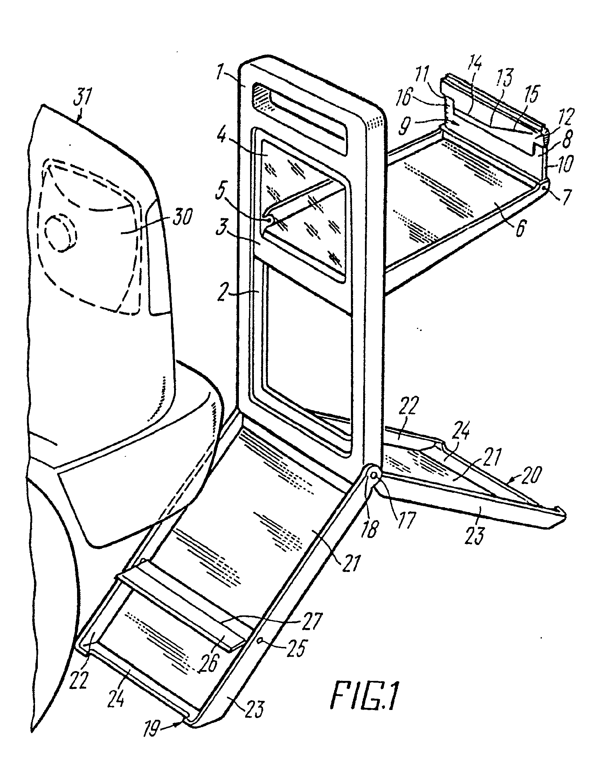

Die Einrichtung zur Kontrolle der Einstellung von Scheinwerfern der Transportmittel enthält eine als Rahmen 1 (Fig. 1) ausgeführte Vertikalführung, die im Transportzustand der Einrichtung als Tragkörper des Gehäuses der Einrichtung dient.

In die Nuten 2 des Rahmens 1 ist die Fassung 3 des Objektivs 4 eingesetzt, das über die an der Fassung 3 angeordneten Gelenke 5 mit einer Zwischenkonsole 6 verbunden ist. Die Konsole 6 ist mittels eines Gelenkes 7 mit einem Schirm 8 verbunden. Die Länge der Zwischenkonsole 6 entspricht der Brennweite des Objektivs 4. Das Objektiv 4 und der Schirm 8 bilden ein optisches System 9. Die Seitenrippen 10, 11 des Schirmes 8 dienen als Führungen für ein bewegliches Element 12, das an eine der Seitenrippen 10 des Schirmes 8 elastisch angedrückt ist. Auf der dem Objektiv 4 zugewandten Oberfläche des beweglichen Elements 12 ist eine Kontrollmarkierung 13 mit einem Horizontalabschnitt 14 un einem geneigten Abschnitt 15 aufgetragen. Die Seitenrippe 11 des Schirmes 8 weist eine lineare Skale 16 auf. Im unteren Teil des Rahmens 1 ist eine Achse 17 eingebaut, auf der mit Hilfe von Bändern 18 zwei Stützen 19, 20 befestigt sind. Jede Stütze 19, 20 wird von einem flachen Bodenstück 21, von als Seitenwände der Stützen 19, 20 wirkenden geschlossenen Seintenrippen 22, 23 und von der Rippe 24 gebildet. Die Rippen 24 der Stützen 19, 20 liegen unter einem stumpfen Winkel zu den Bodenflächen 21 so, daß sie bei der Betriebslage der Stützen 19, 20 den rechten Winkel mit der Ebene des Rahmens 2 bilden.

An den Seitenrippen 22, 23 der Stütze 19, die an der Seite der Eintrittsöffnung des zum optischen System 9 gehörenden Objektivs 4 liegt, ist auf der Achse 25 ein als Spiegel 26 ausgeführtes Mittel zur Orientierung der optischen Achse der Einrichtung in Bezug auf die Fahrrichtung des Transportmittels befestigt. Auf der Arbeitsfläche des Spiegels 26 ist eine Visierlinie 27 aufgetragen, die parallel der Achse 25 und perpendikulär zur optischen Achse des zum optischen System 9 gehörenden Objektivs 4 liegt.

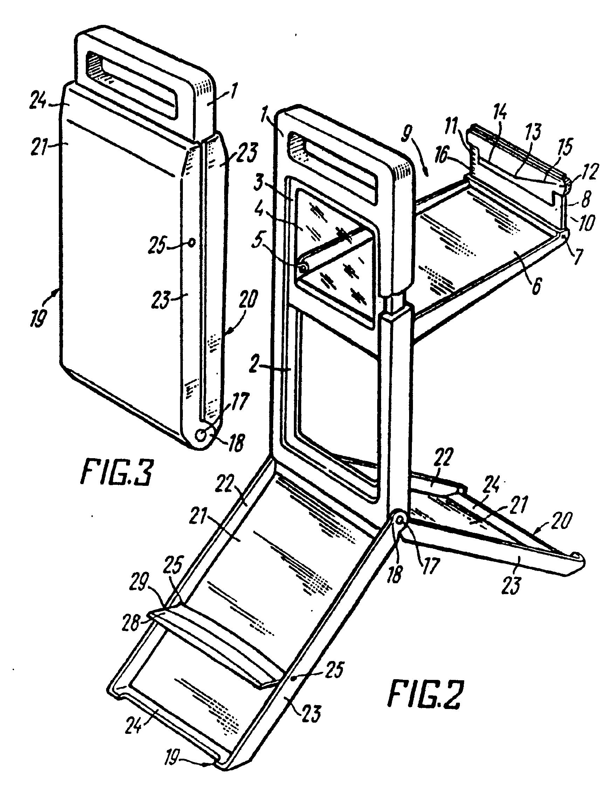

Das Mittel zur Orientierung der optischen Achse der Einrichtung in Bezug auf die Fahrrichtung des Transportmittels kann auch in der Art eines Spiegels 28 (Fig. 2) ausgeführt werden, dessen Reflexionsfläche als Fläche zweiter Ordnung ausgebildet ist, deren Erzeugenden in den Ebenen liegen, die der Vertikalebene an der optischen Achse der Einrichtung parallel sind. Auf der Reflexionsfläche des Spiegels 28 ist eine Visierlinie 29 aufgetragen.

Als Mittel zur Orientierung des optischen Achse der Einrichtung in Bezug auf die Fahrrichtung des Transportmittels können auch mechanische Vorrichtungen (Kontakttaster) oder lichttechnische Einrichtungen benutzt werden, die ein schmales Lichtbündel mit einem großen Streuwinkel in der Horizontalebene erzeugen.

Die Einrichtung zur Kontrolle der Einstellung von Scheinwerfern der Transportmittel wird gegenüber dem Scheinwerfer 30 (Fig. 1) eines Transportmittels 31 aufgestellt. Zu diesem Zweck dreht man die Stützen 19, 20 um die Achse 17, bis sie ihre Endstellungen einnehmen. Dabei befinden sich die Rippen 24 der Stützen 19, 20 in der Lage, bei der ihre Flächen zur Ebene der Rahmens 2 perpendikulär liegen. Dann werden die Zwischenkonsole 6 und der Schirm 8 des optischen Systems 9 durch Drehung in den Gelenken 5 und 7 in eine Stellung gebracht, bei welcher der Schirm 8 senkrecht auf der optischen Achse des Objektivs 4 steht. Je nach der Höhenlage des Scheinwerfers 30 am Transportmittel 31 wird das Objektiv 4 mit der Fassung 3 in den Führungen des Rahmens 1 auf die Höhe gehoben, bei der sein Mittelpunkt mit dem Zentrum des zu kontrollierenden Scheinwerfers 30 des Transportmittels 31 zusammenfällt. Das mit der Kontrollmarkierung 13 versehene bewegliche Element 12 wird durch Verschiebung an den Rippen 10, 11 des Schirmes 8 auch auf die Normhöhe eingestellt, wozu man die an einer Rippe 11 des Schirmes 8 aufgetragene Skale 16 benutzt. Darauf dreht man den Spiegel 26 des Mittels zur Orientierung der optischen Achse der Einrichtung um die Achse 25, bis man die Stellung erreicht, bei der im Spiegel 26 die Abbildung der Karosserie des Transportmittels 31 und der Karosseriepunkte anvisiert werden kann, die man zur Orientierung der optischen Achse der Einrichtung in Bezug auf die Fahrrichtung des Transportmittels 31 ausnutzt. Dann wird die Einrichtung zur Kontrolle der Einstellung von Scheinwerfern der Transportmittel auf den Stützen 19, 20 so gedreht, daß die zur Orientierung gewählten symmetrischen Karosseriepunkte mit der auf dem Spiegel 26 des Mittels zur Orientierung der optischen Achse der Einrichtung aufgetragenen Visierlinie 27 zusammenfallen.

Die Ausführung des Mittels zur Orientierung der optischen Achse der Einrichtung in der Art des Spiegels 28 (Fig. 2), bei dem die Reflexionsfläche als Fläche zweiter Ordnung ausgebildet ist, deren Erzeugenden in den Ebenen liegen, die parallel der an der optischen Achse des Objektive 4 errichteten Vertikalebene sind, verbessert die Bedingungen für das Anvisieren von symmetrischen Karosseriepunkten des Transportmittels 31 durch Vergrößerung des Gesichtsfeldes beim Orientieren der Einrichtung bezüglich des Transportmittels 31 und erhöht dadurch die Orientierungsgenauigkeit.

Dann schaltet man im Scheinwerfer 30 des Transportmittels 31 das Abblendlicht ein und nach der Übereinstimmung der Licht- und Schattengrenze des vom Scheinwerfer 30 des Transportmittels 31 erzeugten Lichtbündels mit der Kontrollmarkierung 13 am beweglichen Element 12 beurteilt man die Größe der Fehleinstellung des Scheinwerfers 30 am Transportmittel 31, die man durch Schwenkung des Scheinwerfers 30 am Transportmittel 31 beseitigt.

Nach Beendigung der Arbeit wird die Einrichtung zur Kontrolle der Einstellung von Scheinwerfern der Transportmittel in den Transportzustand überführt, wozu man den Schirm 8 (Fig. 1, 2) des optischen Systems 9 in den Gelenken 7 um 90° dreht. Dann wird die Zwischenkonsole 6 in den Gelenken 5 um 90° gedreht, und das Objektiv 4 wird samt der Fassung 3 in den Nuten 2 des Rahmens 1 in die untere Endstellung geschoben. Der Spiegel 26 (Fig. 1, 2) oder der Spiegel 28 des Mittels zur Orientierung der optischen Achse der Einrichtung wird durch Drehung um die Achse 25 in eine Lage gebracht, bei der die Fläche des Spiegels 26 oder des Spiegels 28 parallel zur Bodenfläche 21 der Stütze 19 steht. Darauf werden mittels eines Festhalters die Bänder 18 der Stützen 19, 20 ausgeklinkt, und man bringt die letzteren in eine Lage, bei der sie am Rahmen 1 fixiert werden. Dabei dienen die Stützen 19, 20 (Fig. 3) als Seitenwände des Gehäuses, dessen Tragstück durch den Rahmen 1 gebildet wird. Im Transportzustand hat die Einrichtung kleine Abmessungen und ist gegen Einwirkung von Fremdgegenständen und des umgebenden Mediums gut geschützt, die für die optischen Eigenschaften des Objektivs 4 im optischen System 9 schädlich sein können.

Eine kleinere Anzahl von konstruktionselementen in der vorgeschlagenen Einrichtung zur Kontrolle der Einstellung von Scheinwerfern der Transportmittel gewährleistet einen geringeren Arbeitsaufwand bei ihrer Herstellung und ihr kleineres Gewicht. Infolge der Anordnung des Spiegels zur Orientierung der optischen Achse der Einrichtung in Bezug auf die Fahrrichtung des Transportmittels an einer Stütze entfällt eine Reihe von Vorbereitungsmaßnahmen, wie die Einstellung der Konsole des Orientierungsmittels bei der Überführung der Einrichtung in den Betriebszustand und beim Übergang zum Transportzustand. Dies führt zur Erhöhung der Leistung bei der Arbeit mit der Einrichtung. Außerdem wird der Schutz von optischen Elementen der Einrichtung wie Linsen, Spiegel, Schirm vor mechanischen Transportschäden gewährleistet.

Industrielle Anwendbarkeit

Die Erfindung kann in Kraftwagen-Transportbetrieben, beim Kraftfahrzeugservice, in Kraftfahrzeugwerken, bei der Kraftfahrzeug-Inspektion (Verkehrspolizei) verwendet werden.

## Ansprüche

1. Einrichtung zur Kontrolle der Einstellung von Scheinwerfern von Transportmitteln mit einer als Rahmen (1) ausgeführten Vertikalführung, an deren unteren Teil zwei Stützen (19, 20) gelenkig angebaut sind, sowie mit einem optischen System (9), welches aus einem in einer Fassung (3) an der Vertikalführung angeordneten Objektiv (4) und einem an einer der Stützen (20) auf einer Konsole (6) montierten Schirm (8) mit einem horizontalen und einem geneigten Abschnitt (14 bzw. 15) eine Kontrollmarkierung (13) besteht, wobei die Konsole mit der Fassung (3) des Objektivs (4) gelenkig verbunden ist, und mit einem zur Orientierung des optischen Achse der Einrichtung in Bezug auf die Fahrrichtung des Transportmittels vorgesehenen Mittel (26, 28), auf dem die Visierlinie (27) parallel zum Horizontalabschnitt (14) der Kontrollmarkierung (13) am Schirm (8) des optischen Systems (9) liegt, **dadurch gekennzeichnet, daß** Mittel (26, 28) zur Orientierung der optischen Achse der Einrichtung in Bezug auf die Fahrrichtung des Transportmittels an einer an der Seite der Eintrittsöffnung des Objektivs (4) des optischen Systems (9) liegenden Stütze (19) gelenkig befestigt ist, wobei die Achse (25) des Gelenks parallel zur Visierlinie (27) des Mittels zur Orientierung des optischen Achse der Einrichtung in Bezug auf die Fahrrichtung des Transportmittels liegt.

2. Einrichtung nach Anspruch 1, **dadurch gekennzeichnet,** daß das Mittel zur Orientierung des optischen Achse der Einrichtung in Bezug auf die Fahrrichtung des Transportmittels als Spiegel (26) ausgeführt ist, auf dessen Reflexionsfläche die Visierlinie (27) gezogen ist.

3. Einrichtung nach Anspruch 1, **dadurch gekennzeichnet,** daß das Mittel zur Orientierung der optischen Achse der Einrichtung in Bezug auf die Fahrrichtung des Transportmittels als Spiegel (28) ausgeführt ist, dessen Reflexionsfläche als Fläche (29) zweiter Ordnung ausgebildet ist.

## Revendications

1. Dispositif pour le contrôle du réglage de projecteurs lumineux de moyens de transport, avec un guide vertical réalisé sous forme de cadre (1), à la partie inférieure duquel, deux supports (19, 28) sont rapportés de façon articulée, ainsi qu'avec un système optique (9) qui se compose d'un objectif (4) disposé sur un guide vertical dans une monture (3) et un écran (8) monté sur une console (6) sur l'un des supports (28) et ayant un marquage de repérage de contrôle (13) avec une portion horizontale (14) et une portion inclinée (15), la console étant reliée de façon articulée à la monture (3) de l'objectif (4), et avec un moyen (26; 28) prévu pour l'orientation de l'axe optique du dispositif par rapport à la direction de roulement du moyen de transport et sur lequel la ligne de visée (27) est située parallèlement à la portion horizontale (14) du marquage de repérage de contrôle (13) sur l'écran (8) du système optique (9), caractérisé en ce que le moyen (26 ; 28) pour l'orientation de l'axe optique du dispositif par rapport au sens de roulement du moyen de transport est fixé de façon articulée à un support (19) situé sur le côté de l'orifice d'entrée de l'objectif (4) du système optique (9), l'axe (25) de l'articulation étant situé parallèlement à la ligne de visée (27) du moyen pour l'orientation de l'axe optique du dispositif par rapport au sens de roulement du moyen de transport.

2. Dispositif selon la revendication 1, caractérisé en ce que le moyen pour l'orientation de l'axe optique du dispositif par rapport à la direction de roulement du moyen de transport est réalisé sous forme de miroir (26) sur la surface de réflexion duquel est tracée la ligne de visée (27).

3. Dispositif selon la revendication 1, caractérisé en ce que le moyen pour l'orientation de l'axe optique du dispositif par rapport à la direction de roulement du moyen de transport est réalisé sous forme de miroir (28) dont la surface de réflexion est réalisée sous forme de surface (29) du second ordre.

## Claims

1. A device for checking the setting of headlights of means of transport, having a vertical guide which is constructed in the form of a frame (1) and on the lower portion of which two supports (19, 20) are pivotally mounted, and having an optical system (9) comprising an object lens (4) arranged in a mount (3) on the vertical guide and a screen (8) which is mounted above one of the supports (20) on a cantilever (6) and which has a horizontal and a sloped portion (14 and 15 respectively) of an index mark (13), the cantilever being pivotally attached to the mount (3) of the object lens (4), and having means (26 ; 28) provided for orientating the optical axis of the device with respect to the direction of travel of the means of transport and on which the position indicator line (27) lies parallel with the horizontal portion (14) of the index mark (13) on the screen (8) of the optical system (9), characterized in that the means (26 ; 28) for orientating the optical axis of the device with respect to the direction of travel of the means of transport is pivotally secured to a support (19) arranged on the side of the entry opening of the object lens (4) of the optical system (9), the pivot shaft (25) being parallel with the position indicator line (27) of the means for orientating the optical axis of the device with respect to the direction of travel of the means of transport.

2. A device according to Claim 1, characterized in that the means for orientating the optical axis of the device with respect to the direction of travel of the means of transport is formed as a mirror (26), on whose reflecting surface the position indicator line (27) is traced.

3. A device according to Claim 1, characterized in that the means for orientating the optical axis of the device with respect to the direction of travel of the means of transport is formed as a mirror (28), whose reflecting surface is formed as a second-order surface (29).

*FIG.1*

FIG.3

FIG.2